# Europäisches Patentamt

**European Patent Office**

**Office européen des brevets**

(11) Numéro de publication: **0 202 972**
**B1**

---

(12) ## FASCICULE DE BREVET EUROPEEN

(45) Date de publication du fascicule du brevet:
**23.05.90**

(51) Int. Cl.⁵: **H02G 15/18, H01R 4/70**

(21) Numéro de dépôt: **86400788.5**

(22) Date de dépôt: **14.04.86**

---

(54) Fourreau pour protéger une jonction électrique entre un câble souterrain et un câble aérien isolé à basse tension.

---

(30) Priorité: **18.04.85 FR 8505857**

(43) Date de publication de la demande:
**26.11.86 Bulletin 86/48**

(45) Mention de la délivrance du brevet:
**23.05.90 Bulletin 90/21**

(84) Etats contractants désignés:
**CH DE GB IT LI SE**

(56) Documents cités:
**DE-B- 1 165 122**
**FR-A- 2 537 797**

(73) Titulaire: **TREFICABLE PIRELLI, 1, rue des Usines, F-94410 Saint Maurice(FR)**

(72) Inventeur: **Billet, Claude, 5 avenue Pablo Picasso, F-94120 Fontenay Sous Bois(FR)**

(74) Mandataire: **Lepeudry-Gautherat, Thérèse et al, ARMENGAUD JEUNE CABINET LEPEUDRY 6, rue du Faubourg Saint Honoré, F-75008 Paris(FR)**

---

## Description

L'invention est relative à un fourreau pour protéger une jonction électrique entre un câble multipolaire et une pluralité de conducteurs indépendants. Elle concerne notamment les jonctions en basse tension, en monophasé ou triphasé, entre un câble souterrain et un câble aérien isolé, pour la distribution domestique d'énergie électrique.

Dans un réseau de distribution électrique, on est amené à relier une ligne souterraine à une ligne aérienne : par exemple un câble souterrain multipolaire, qui comprend plusieurs conducteurs juxtaposés et enfermés dans une gaine unique, à un câble aérien isolé, qui est généralement constitué d'un faisceau torsadé de conducteurs isolés indépendants. Cette liaison s'effectue le long du poteau support du câble aérien : chaque conducteur du câble souterrain est relié au conducteur correspondant du câble aérien au moyen d'un manchon de raccordement serti sur les extrémités des deux conducteurs, les différents manchons étant décalés les uns par rapport aux autres le long du poteau. L'extrémité de la gaine du câble souterrain est protégée par un embout approprié thermorétractable, et chaque manchon de raccordement est isolé et rendu étanche de façon indépendante par une gaine thermorétractable.

Cette technique classique présente plusieurs inconvénients : d'une part, l'emploi d'un générateur d'air chaud tel qu'un brûleur air-propane, est d'un maniement peu pratique et parfois même dangereux quand on travaille sur un poteau, d'autre part, cette jonction s'étend sur une grande longueur, afin d'éviter tout risque d'amorçage entre les manchons.

On connaît par ailleurs du document FR-A-2 537 797 un fourreau rigide en deux parties réunies par vissage, l'une présentant à une extrémité une ouverture pourvue d'un manchon élastique pré-expansé, capable de s'appuyer de façon étanche sur le câble multipolaire, l'autre partie présentant à une extrémité une paroi de butée comportant autant d'ouvertures que de conducteurs à relier, pourvues chacune d'un manchon élastique pré-expansé, capable de s'appuyer de façon étanche sur l'un des conducteurs. La paroi latérale de la seconde partie du fourreau définit, avec plusieurs parois internes, une pluralité d'enveloppes destinées à entourer les manchons de raccordement entre conducteurs.

Un tel fourreau donne satisfaction. Toutefois, il est d'un coût élevé en raison du nombre de pièces assez important qu'il comporte.

La présente invention concerne un fourreau conforme au préambule de la revendication 1 qui se distingue du précédent par le fait qu'il est en une seule pièce et qu'il présente une élasticité intrinsèque telle que l'ouverture destinée à recevoir le câble multipolaire est capable d'être traversée par l'ensemble des manchons de raccordement juxtaposés et que l'étanchéité obtenue à la traversée de chacune de ses ouvertures, aussi bien celle précitée que celles destinées à recevoir un conducteur indépendant, résulte de cette seule élasticité.

Avantageusement le fourreau comporte des moyens de préhension qui sont de préférence disposés au voisinage de la première extrémité du fourreau.

Selon un mode de réalisation particulier, ces moyens de préhension comprennent un tronc de cône s'évasant vers l'extérieur du fourreau à partir de l'ouverture de sa première extrémité et se terminant par un bourrelet périphérique.

Avantageusement le fourreau comporte, au droit de chacune des ouvertures de la paroi de butée, une poche de réserve de graisse qui est pratiquée dans l'épaisseur de la paroi de butée.

De préférence, la paroi latérale du fourreau comprend une pluralité de nervures de renfort longitudinales réparties à sa périphérie.

Selon un mode de réalisation préféré de l'invention, ce fourreau, qui est destiné à recevoir entre deux et quatre manchons de raccordement, est de forme générale tubulaire et comporte quatre enveloppes réparties périphériquement.

La description qui suit et qui ne présente aucun caractère limitatif, doit être lue en regard des figures annexées, parmi lesquelles :

- la figure 1 est une vue en élévation et en coupe selon la ligne I-I de la figure 2, d'un fourreau selon l'invention ;
- la figure 2 est une coupe selon la ligne II-II de la figure 1.

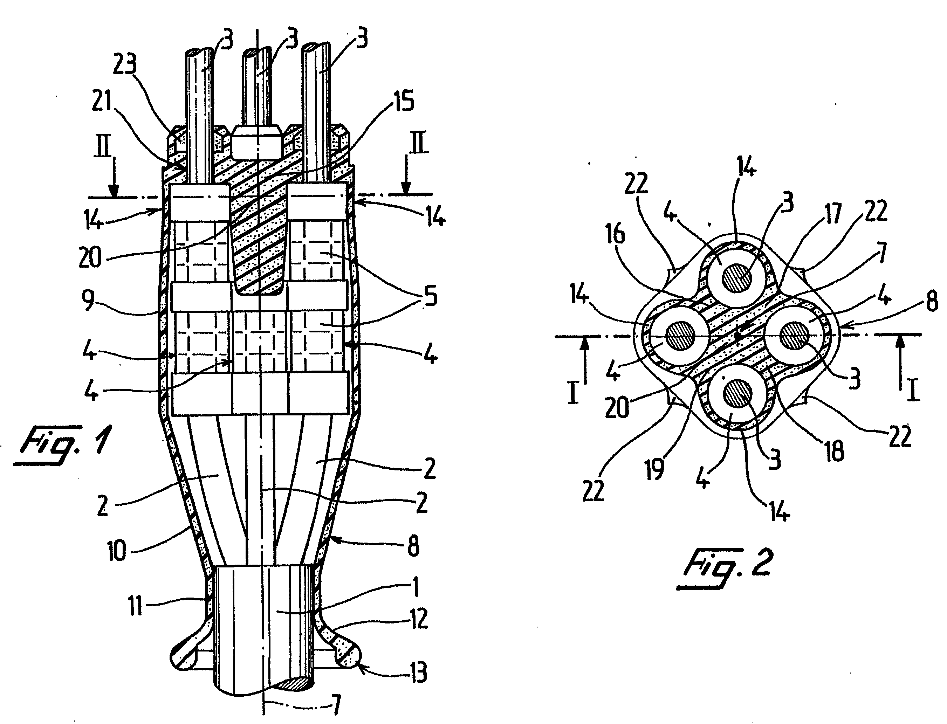

Sur la figure 1 est représenté un câble souterrain 1 triphasé comportant quatre conducteurs 2, à savoir trois conducteurs de phase et un neutre; seuls trois d'entre eux sont visibles sur cette figure. Ces quatre conducteurs 2 sont isolés individuellement et enfermés dans une gaine commune cylindrique.

Le câble souterrain 1 est relié à un câble aérien isolé comprenant quatre conducteurs indépendants et isolés 3, enroulés en torsade le long du câble. Le tronçon d'extrémité du câble souterrain 1 et celui du câble aérien sont fixés, par exemple, le long d'un poteau support de la ligne aérienne, le câble souterrain étant dirigé vers le haut et le câble aérien dirigé vers le bas de ce poteau. Les extrémités des deux câbles devant être reliées sont disposées dans le prolongement l'une de l'autre, selon une direction sensiblement verticale.

La liaison entre le câble souterrain 1 et le câble aérien s'effectue de façon connue en soi au moyen de manchons de raccordement cylindriques 4 : les extrémités de deux conducteurs correspondants, 2 et 3, à relier sont dénudées et introduites dans un manchon de raccordement 4, lequel est alors serti sur ces conducteurs. Ces manchons 4 sont isolés électriquement et rendus étanches de façon individuelle soit par conception, soit sur chantier, par exemple au moyen de gaines élastiques.

Les quatre manchons de raccordement 4 sont disposés parallèlement à l'axe 7 du câble souterrain 1, et en regard les uns des autres. Plus précisément, ils sont répartis de façon régulière autour de l'axe 7 (figure 2).

La jonction ainsi définie est recouverte d'un fourreau de protection 8 en un matériau élastique, notamment en un élastomère moulé tel que le Néoprène (marque déposée) ou l'E.P.D.M. (éthylène-propylène-diène-monomère). Ce fourreau 8 est de forme générale tubulaire. Sa portion médiane 9 présente une section dont les dimensions sont les plus importantes et qui, dans le cas présent, est sensiblement carrée. Cette portion médiane 9 se prolonge d'un côté en se rétrécissant par une portion conique 10 jusqu'à une première extrémité du fourreau, qui est constituée par une portion de cylindre creux 11 délimitant une ouverture dont le diamètre est légèrement inférieur au diamètre extérieur de la gaine du câble souterrain 1. Par son élasticité propre, la portion de cylindre 11 s'adapte ainsi de façon étanche sur la gaine du câble souterrain 1. La portion de cylindre 11 se prolonge à son tour, en s'évasant vers l'extérieur du fourreau, par un tronc de cône 12 dont le bord libre porte un bourrelet périphérique 13.

La portion médiane 9 du fourreau 8 se prolonge en se rétrécissant légèrement du côté de la seconde extrémité de celui-ci. La paroi latérale, ou paroi extérieure, est mise en forme à cette extrémité de façon à définir quatre portions 14 d'enveloppes cylindriques, dont la concavité est tournée vers l'axe du fourreau 8. Les quatre portions 14 d'enveloppes cylindriques s'étendent parallèlement à l'axe du fourreau 8 et elles sont reliées les unes aux autres par leurs bords longitudinaux.

La seconde extrémité du fourreau 8 comporte encore quatre parois internes 16 à 19 disposées en croix autour de l'axe du fourreau et s'étendant selon cet axe. Ces parois internes sont reliées entre elles au voisinage de l'axe du fourreau, dans une région 20 (cf. figure 1 et figure 2) et chacune d'elles est reliée à la paroi extérieure du fourreau 8, au niveau de la ligne de jonction entre deux portions 14 d'enveloppes cylindriques adjacentes. Les parois internes 16 à 19 définissent, avec les portions 14, quatre enveloppes cylindriques complètes dont le diamètre intérieur est sensiblement égal au diamètre des manchons de raccordement 4.

Les parois internes 16 à 19 peuvent s'étendre (figure 1) vers l'intérieur du fourreau 8, sur une longueur supérieure à celle des portions 14 d'enveloppes cylindriques, de façon à favoriser le maintien des manchons de raccordement 4 et leur isolement mutuel.

La seconde extrémité du fourreau 8 comporte également une paroi de butée 15 perpendiculaire à l'axe du fourreau. Cette paroi de butée 15 se raccorde au bord périphérique de la paroi latérale du fourreau 8, ainsi qu'aux parois internes 16 à 19.

La paroi de butée 15 comporte quatre ouvertures 21 pratiquées au droit des enveloppes cylindriques de l'extrémité du fourreau 8. Le diamètre de ces ouvertures 21 est légèrement inférieur au diamètre des conducteurs isolés 3 du câble aérien, permettant ainsi une adaptation sur ce dernier par élasticité de façon étanche.

Au droit de chaque ouverture 21 de la paroi de butée 15 et vers l'extérieur du fourreau 8 est prévue une poche de réserve de graisse 23. Cette poche peut être pratiquée dans l'épaisseur de la paroi de butée 15, sous la forme d'une gorge circulaire de diamètre supérieur au diamètre de l'ouverture 21.

Dans le cas de câbles monophasés à relier, on ne pratiquera, lors du moulage du fourreau 8, que deux ouvertures sur quatre, ce qui permettra d'utiliser avantageusement le même moule.

De façon à donner au fourreau 8 une rigidité suffisante, quatre nervures 22 sont formées sur sa surface extérieure; ces nervures sont disposées au centre des quatre faces de la portion médiane 9 du fourreau 8 à section carrée, et s'étendent sur une partie importante de la longueur du fourreau.

Lors de l'utilisation d'un tel fourreau pour protéger une jonction électrique, celui-ci est enfilé sur le câble aérien avant la réalisation de la jonction, chacun des conducteurs aériens 3 étant introduit, à partir de la paroi de butée 15, dans une des ouvertures 21 de celle-ci, pour traverser entièrement le fourreau 8. L'introduction préalable de graisse dans les poches 23 favorise le coulissement des conducteurs dans le fourreau. Une fois la jonction entre conducteurs correspondants 2, 3 réalisée au moyen des manchons de raccordement 4, le fourreau 8 est ramené sur la jonction. L'élasticité du fourreau 8 et la forme du tronc de cône 12 permettent à la portion de cylindre 11 de se laisser traverser par l'ensemble des quatre manchons de raccordement 4 éventuellement recouverts de lubrifiant, moyennant une traction manuelle sur le fourreau 8 grâce à son bourrelet 13.

Dans ce déplacement du fourreau 8, les extrémités supérieures 6 des manchons de raccordement 4 prennent place, grâce à l'élasticité du fourreau, dans les enveloppes cylindriques. De la même façon, la portion de cylindre 11 s'applique sur la gaine du câble souterrain 1. Le déplacement du fourreau 8 vers le bas est limité par la mise en butée des manchons 4 contre la paroi de butée 15. Le fourreau 8 occupe alors sa position définitive et assure un isolement électrique complémentaire entre les manchons ainsi que l'étanchéité de la jonction électrique dans son ensemble : les parois du fourreau 8 s'appliquent en effet de façon étanche, d'une part sur les conducteurs 3 du câble aérien et éventuellement sur les manchons de raccordement 4 et, d'autre part sur la gaine du câble souterrain 1.

Lorsqu'une telle jonction est réalisée en bas d'un poteau, il peut être avantageux de la recouvrir par un carter de protection mécanique.

On notera que la paroi de butée du fourreau permet un positionnement précis et simple de celui-ci le long de l'axe de câble, lorsqu'il est ramené sur la jonction électrique.

Par ailleurs, les moyens de préhension, qui font corps avec le fourreau, permettent de ramener celui-ci sur la jonction par une traction énergique obligeant le fourreau à se déformer radialement lorsqu'il glisse sur la jonction, en particulier sur les manchons de raccordement. Il n'est donc pas nécessaire d'utiliser des outils complémentaires destinés à manipuler le fourreau, et notamment à le dilater radialement pour le ramener sur la jonction.

## Revendications

1. Fourreau (8) pour protéger une jonction électrique entre un câble multipolaire (1) et une pluralité de conducteur indépendants (2, 3), ledit câble multipolaire (1) comprenant une pluralité de conducteurs enfermés dans une gaine commune, chacun étant relié à un conducteur indépendant au moyen d'un manchon de raccordement (4), ledit fourreau (8) étant destiné à être monté sur ledit câble multipolaire (1) de façon à assurer le maintien et l'isolement électrique mutuel de ces manchons (4), ainsi que l'étanchéité de la jonction dans son ensemble, et présentant à une première extrémité, une ouverture capable de s'appuyer de façon étanche sur ledit câble multipolaire (1), ledit fourreau (8) présentant une seconde extrémité fermée par une paroi de butée (15) qui comporte autant d'ouvertures (21) que de conducteurs (2, 3) à relier, chacune desdites ouvertures (21) étant capable de s'appuyer de façon étanche sur l'un desdits conducteurs indépendants (2, 3), la paroi latérale du fourreau (8) définissant, avec une ou plusieurs parois internes (16 à 19), une pluralité d'enveloppes destinées à entourer lesdits manchons de raccordement (4) sur au moins une partie de leur longueur et disposées chacune au droit de l'une desdites ouvertures (21) de la paroi de butée, caractérisé en ce que ledit fourreau (8) est en une seule pièce et en ce qu'il présente une élasticité intrinsèque telle que ladite ouverture de sa première extrémité est capable d'être traversée par l'ensemble des manchons de raccordement (4) juxtaposés et que l'étanchéité obtenue à la traversée de chacune desdites ouvertures résulte de cette seule élasticité.

2. Fourreau selon la revendication 1, caractérisé en ce qu'il comporte des moyens de préhension (13).

3. Fourreau selon la revendication 2, caractérisé en ce que lesdits moyens de préhension (13) sont disposés au voisinage de ladite première extrémité du fourreau (8).

4. Fourreau selon la revendication 3, caractérisé en ce que lesdits moyens de préhension comprennent un tronc de cône (12) s'évasant vers l'extérieur du fourreau à partir de l'ouverture de sa première extrémité et se terminant par un bourrelet périphérique (13).

5. Fourreau selon l'une quelconque des revendications précédentes, caractérisé en ce qu'il comporte, au droit de chacune desdites ouvertures (21) de la paroi de butée (15), une poche (23) de réserve de graisse qui est pratiquée dans l'épaisseur de ladite paroi de butée (15).

6. Fourreau selon l'une quelconque des revendications précédentes, caractérisé en ce que sa paroi latérale comprend une pluralité de nervures de renfort (22) longitudinales réparties à sa périphérie.

7. Fourreau selon l'une quelconque des revendications précédentes, caractérisé en ce qu'il est destiné à recevoir entre deux et quatre manchons de raccordement (4), en ce qu'il est de forme générale tubulaire et en ce qu'il comporte quatre enveloppes réparties périphériquement.

## Claims

1. Sleeve (8 for protecting an electrical junction between a multipolar cable (1) and a plurality of separate conductors (2, 3), the said multipolar cable (1) comprising a plurality of conductors enclosed in a common sheathing, each being connected to a separate conductor by means of a connection-sleeve (4), the said sleeve (8) being intended to be mounted on the said multipolar cable (1) so as to ensure the holding in position and mutual electrical insulation of these connection-sleeves (4), as well as the sealing of the junction in its entirety, and having at a first end an opening capable of sealingly engaging the said multipolar cable (1), the said sleeve (8) having a second end closed by a stop wall (15) which comprises as many openings (21) as there are conductors (2, 3) to be connected, each of the said openings (21) being capable of sealingly engaging one of the said separate conductors (2, 3), the side wall of the sleeve (8) defining, with one or several internal walls (16 to 19), a plurality of casings intended to surround the said connection-sleeves (4) over at least a part of their length and each aligned with one of the said openings (21) of the stop wall, characterized in that the said sleeve (8) is in one piece and in that it has an intrinsic elasticity such that the said opening of its first end is capable of being passed through by all the juxtaposed connection-sleeves (4) and that the sealing obtained when each of the said openings is passed through arises from this elasticity alone.

2. Sleeve according to claim 1, characterized in that it comprises gripping means (13).

3. Sleeve according to claim 2, characterized in that the said gripping means (13) are disposed in the vicinity of the said first end of the sleeve (8).

4. Sleeve according to claim 3, characterized in that the said gripping means comprise a truncated cone (12) widening towards the outside of the sleeve from the opening of its first end and ending in a peripheral bead (13).

5. Sleeve according to any one of the preceding claims, characterized in that it comprises, aligned with each of the said openings (21) of the stop wall (15), a grease storage pocket (23) which is formed in the thickness of the said stop wall (15).

6. Sleeve according to any one of the preceding claims, characterized in that its side wall comprises a plurality of longitudinal strengthening ribs (22) distributed on its periphery.

7. Sleeve according to any one of the preceding claims, characterized in that it is intended to receive between two and four connection-sleeves (4), in that it has a generally tubular shape and in that it comprises four casings distributed peripherally.

## Patentansprüche

1. Schutzhülle (8) für elektrische Verbindungen zwischen einem mehrpoligen Kabel (1) und einer Mehrzahl einzelner Leiter (2, 3), wobei das mehrpolige Kabel (1) mehrere von einem gemeinsamen Mantel umschlossene Leiter umfasst, die jeweils über eine Verbindungsmuffe (4) mit einem einzelnen Gegenleiter verbunden sind, und wobei die Hülle (8) so auf dem mehrpoligen Kabel (1) montiert wird, dass für die Muffen (4) ein sicherer Halt und eine gegenseitige elektrische Isolierung sowie eine wirksame Abdichtung der Verbindung in ihrer Gesamtheit gewährleistet sind, mit einem ersten Ende mit einer einzelnen Öffnung zur dichten Anlage an dem mehrpoligen Kabel (1); einem zweiten Ende, das durch eine Stirnwand (15) abgeschlossen ist mit einer der Zahl der zu verbindenden Leiter (2, 3) entsprechenden Anzahl von Öffnungen (21), von denen sich jede dicht um einen dieser einzelnen Leiter (2, 3) legt; und einer Seiten- oder Aussenwandung, die im Zusammenwirken mit einer oder mehr Innenwandungen (16 bis 19) eine Mehrzahl von Hülsen bildet zur Aufnahme der Verbindungsmuffen (4) über zumindest einen Teil ihrer Länge, die jeweils im Bereich einer der Öffnungen (21) in der Stirnwand angeordnet sind, dadurch gekennzeichnet, dass die Hülle (8) einteilig ausgebildet ist und eine so hohe Eigenelastizität aufweist, dass die Öffnung im ersten Ende sämtliche nebeneinanderliegenden Verbindungsmuffen (4) aufzunehmen vermag, und dass die im Durchgangsbereich einer jeden dieser Öffnungen erzielte Abdichtung allein auf dieser Elastizität beruht.

2. Schutzhülle gemäss Anspruch 1, dadurch gekennzeichnet, dass die Hülle Greifelemente (13) aufweist.

3. Schutzhülle gemäss Anspruch 2, dadurch gekennzeichnet, dass sich die Greifelemente (13) in der Nähe des ersten Endes der Hülle (8) befinden.

4. Schutzhülle gemäss Anspruch 3, dadurch gekennzeichnet, dass die Greifelemente aus einem Kegelstumpf (12) bestehen, der sich von der Öffnung des ersten Endes ausgehend zur Aussenseite der Hülle erweitert und in einem Randwulst (13) endigt.

5. Schutzhülle gemäss den vorstehenden Ansprüchen, dadurch gekennzeichnet, dass die Hülle um jede der Öffnungen (21) in der Stirnwand (15) herum eine Fettvorratstasche (23) beinhaltet, die in der Dicke der Stirnwand (15) ausgebildet ist.

6. Schutzhülle gemäss den vorstehenden Ansprüchen, dadurch gekennzeichnet, dass die Seitenwandung eine Mehrzahl von über den Hüllenumfang verteilten längsgerichteten Verstärkungsrippen (22) aufweist.

7. Schutzhülle gemäss den vorstehenden Ansprüchen, dadurch gekennzeichnet, dass sie zwei bis vier Verbindungsmuffen (4) aufnehmen kann, dass sie im wesentlichen eine schlauchartige Form besitzt und dass sie vier über den Umfang verteilte Hülsen aufweist.

Fig. 2

Fig. 1